Europäisches Patentamt

European Patent Office

Office européen des brevets

(19)

(11) Publication number: **0 125 815**
A2

(12) # EUROPEAN PATENT APPLICATION

(21) Application number: **84302687.3**

(22) Date of filing: **19.04.84**

(51) Int. Cl.³: **C 08 K 3/34**
**C 09 D 3/74**

(30) Priority: **11.05.83 GB 8312992**

(43) Date of publication of application:
**21.11.84 Bulletin 84/47**

(84) Designated Contracting States:
**DE FR GB NL SE**

(71) Applicant: **IMPERIAL CHEMICAL INDUSTRIES PLC**
**Imperial Chemical House Millbank**
**London SW1P 3JF(GB)**

(72) Inventor: **Boffey, Stuart Samuel**
**37 Bright Street**
**Crewe Cheshire(GB)**

(74) Representative: **Oldroyd, Alan et al,**
**Imperial Chemical Industries PLC Legal Department:**
**Patents Po Box 6**
**Welwyn Garden City Herts, AL7 1HD(GB)**

(54) **Filled polymer films.**

(57) A filled polymer film comprising a dispersion of vermiculite lamellae in a film-forming polymeric binder and use of the film for the insulation and/or fire-protection of substrates against heat and fire.

EP 0 125 815 A2

0125815

QM.32718 EP

# FILLED POLYMER FILMS

This invention relates to filled polymer films comprising an organic polymer and an inorganic filler and to a method for the production of the films and to use of the films for insulation and/or for protection of substrates against fire, particularly metallic substrates such as aluminium and combustible materials such as wood and organic polymer foams.

According to the present invention there is provided a filled polymer film comprising a dispersion of vermiculite lamellae in a film-forming polymeric binder.

The term "vermiculite" is used herein as including all minerals known minerallogically and commercially as vermiculite, including minerals having a proportion of vermiculite layers, for example hydrobiotites and chlorites.

By the term "vermiculite lamellae" we mean tiny particles or flakes of the layer mineral vermiculite obtained by treating vermiculite in water and applying shear to the swollen vermiculite particles in water to delaminate the layer mineral and produce an aqueous suspension of tiny particles of the layer mineral. The tiny particles or lamellae are of size below 100 micron. The particles have a high aspect ratio (length or breadth . thickness) of at least 10, preferably at least 100 and more preferably at least 1,000 for example 10,000. The lamellae are mutually adhesive and are film-forming.

Production of aqueous suspension or slurries of vermiculite lamellae by treatment of vermiculite particles with one or more aqueous solutions of metal (especially alkali metal) salts or alkyl ammonium salts followed by swelling in water and then milling to delaminate the vermiculite is well known and is described for example in United Kingdom Patent Specification Nos 1,016,385; 1,119,305; 1,585,104; and 1,593,382 and in United States Patent Specification No. 4,130,687. Vermiculite lamellae produced by any one of the known chemical delamination processes may be incorporated in the films of the present invention.

Vermiculite lamellae are readily dispersed in water and are readily incorporated in aqueous solutions or dispersions of polymers by mixing the components and agitating the mixture, for example by gentle stirring, to form a castable, film-forming composition. Stabilising surface active agents may be added to the mixture to inhibit flocculation of one or more of the components during the mixing operation. Usually the lamellae will be added to the solution or dispersion of the polymer in the form of an aqueous suspension of the lamellae and in particular in the form of the aqueous suspension resulting from the vermiculite delamination process. However, although the suspension produced in the so-called chemical delamination process may be used directly in forming the film-forming compositions of the invention we prefer to incorporate only lamellae of size below about 50 microns and preferably below about 20 microns in the coating compositions. Accordingly we prefer to treat the suspension of lamellae to eliminate all particles of size greater than 50 microns, and preferably all particles of size greater than 20 microns, before the suspension is incorporated in the film-forming composition. The treatment of suspensions of vermiculite lamellae to eliminate large particles is described in our United Kingdom Patent Specification No. 1,593,382, the disclosure of which is incorporated herein by reference. For use in the films of the invention we especially prefer that the vermiculite lamellae or at least a major proportion of the vermiculite lamellae (for example at least 60% by weight of the lamellae) have a particle size of less than 5 microns. Thus the especially preferred suspension of vermiculite lamellae contains lamellae of size below 20 microns of which a major proportion of the lamellae are of size below 5 microns.

The amount of vermiculite lamellae incorporated in the film-forming compositions may vary within wide limits from a few percent (say 2%) up to about 95% by weight based on the weight of the dry solids (or in the case where the composition contains other additives, on

-4-

the total weight of non-volatile solids in the composition). Preferably the amount of lamellae is from 20% to 80% especially from 40% to 75%, by wieght. The amount will depend to some extent upon the intended use of the resulting filled polymer film, being in general less for films where good corrosion resistance is a requirement and greater for compositions where fire-protection is important but corrosion resistance is not essential. The optimum amount of vermiculite for any particular use of the film is readily determined. Surprisingly high loadings of vermiculite lamellae, for example greater than 50% by weight of the solids in the film-forming composition do not seriously impair the mechanical properties of the resulting films.

A wide variety of polymers (homopolymers and copolymers) may be used as the film-forming polymer component of the films. Water-soluble polymers may be used, for example polyvinyl alcohol, polyacrylamide, polyvinyl pyrrolidone and polyacrylic or polymethacrylic acids and copolymers thereof, but usually the polymer will be dispersed rather than dissolved in water. Mixtures of water-soluble polymers and water-insoluble polymers may be used such that the film-forming composition comprises both a solution and a dispersion of polymeric binder components. In the case of water-soluble polymers, especially where the resulting films are required to possess corrosion resistance properties, there is advantageously used a polymer or mixture of polymers which can be rendered water-insoluble after casting of the film-forming composition on to a suitable substrate; for instance polymers which can be cross-linked for example by heating and/or use of catalysts may advantageously be employed such that the film is readily rendered insensitive to water. Where the composition comprises a water-soluble polymer and a water-insoluble polymer, the water-soluble polymer may advantageously be capable of undergoing a cross-linking reaction with the water-insoluble polymer. In this case the water-soluble polymer (the latex polymer) may be provided, for example, with functional groups such as hydroxyl groups and amino groups by inclusion of an appropriate comonomer containing the functional group.

We especially prefer a dispersion of the polymer in an aqueous medium, for example a latex. The aqueous medium may be wholly water or it may be a mixture of water with an organic solvent in an amount of up to 30%, preferably not more than 20% and especially less than 10%, by weight.

Polymers which may be used as the film-forming polymer in aqueous dispersions used in the present invention include homopolymers and copolymers of the following:

vinyl chloride,

vinylidene chloride,

tetrafluoroethylene,

hexafluoropropene,

vinylidene fluoride,

vinyl esters of alkanoic acids having from 1 to 18 carbon atoms in the alkyl groups, especially vinyl acetate,

acrylic and methacrylic esters of alkanoic acids having from 1 to 18 carbon atoms in the alkyl group, especially the said esters having from 1 to 12 carbon atoms in the alkyl group, for example the methyl,

ethyl, butyl, and 2-ethylhexyl esters,

acrylontrile and methacrylonitrile

mono- and di-ethylenically unsaturated hydrocarbons, for example ethylene, isobutene, styrene, alphamethyl styrene and aliphatic dienes such as butadiene, isoprene and chloroprene.

The polymers may also (optionally) contain a small proportion of one or more unsaturated polymerisable acids, e.g. aliphatic alpha-beta unsaturated carboxylic acids. The proportion of such acid(s) may be, for example, from 0.1 parts to 20 parts, preferably 0.4 to 5 parts, by weight per hundred parts of the total monomer components of the polymer. Acids which may be used include acrylic, methacrylic, itaconic and citraconic acids. Mixtures of polymers may be used if desired.

Polyvinyl acetate and copolymers of vinyl acetate with one or more of vinyl chloride, vinylidene chloride, styrene, acrylonitrile, methacrylonitrile, and one or both of the acrylic and methacrylic acid esters mentioned above may be used. Similarly copolymers of one or more of the acrylic or methacrylic acid esters mentioned above with one or more of vinyl acetate, vinyl chloride, vinylidene chloride, styrene, acrylonitrile, and methacrylonitrile also may be used. Homopolymers of ethylene, isobutylene, and styrene, and copolymers of one or more of these hydrocarbons with one or more esters, nitriles or amides of acrylic acid or methacrylic acid or with vinyl esters, such as vinyl acetate and vinyl chloride, or with vinylidene chloride may also be used. The diene polymers are generally used in aqueous based film-forming compositions in the form of copolymers with one or more of styrene, acrylonitrile, methacrylonitrile, and the above-mentioned esters of acrylic acid or methacrylic acid.

Aqueous dispersions of polymers may be made using one or more emulsifiers of anionic, cationic, or non-ionic type. Mixtures of two or more emulsifiers regardless of type may be used, though it is generally undesirable to mix a cationic type with an anionic type in any appreciable amounts.

The polymer may be prepared in situ in an aqueous dispersion by an emulsion polymerisation or a suspension polymerisation technique, or the dispersion may be prepared by post-emulsification of a pre-formed polymer. In a particular embodiment of in situ preparation of the polymer, the polymer may be prepared in an aqueous suspension of vermiculite lamellae.

Where fire-protection and flame-retardancy are the prime requirements of the film, a particularly suitable polymeric binder is derived from a halogen-containing monomer and/or is a halogen-containing polymer or copolymer e.g. a copolymer of (i) vinyl chloride, (ii) vinylidene chloride and (iii) one or more alkyl acrylates or alkyl methacrylates having from 1 to 12 carbon atoms in the alkyl group; such polymers may optionally also contain one or more aliphatic alpha-beta unsaturated carboxylic acids. Examples of such copolymers are those described generally and specifically in the specification of our United Kingdom Patent Specification No. 1 558 411 and European Patent Publication No. 30080A1.

Where flexibility is a major requirement in the film, we prefer to employ polymers or copolymers having a lower glass-transition temperature (Tg) than those described in the immediately preceding paragraph. Optionally a coalescing solvent such as 2-butoxy ethanol may be incorporated in the film-forming composition to aid film-formation as also may a plasticiser to impart enhanced flexibility to films made from the composition.

The film-forming compositions may contain other additives, for example viscosity-modifying agents, pigments, corrosion inhibitors, surfactants, defoamers and dispersants, such as are usually incorporated in aqueous polymer-based film-forming compositions. As described hereinbefore, the coating composition may contain other layer minerals as well as vermiculite, for example kaolin (clay) and montmorillonite.

Any of the known film-forming techniques may be employed to make films from the film-forming composition. Usually a casting technique or a spreading technique will be employed depending upon the viscosity and rheological properties of the film-forming composition. Spreading techniques using a knife-spreader or doctor blade are useful for viscous compositions. Other suitable techniques which may be used for laying down the film-forming composition include spraying, painting, rolling/calendering and extrusion operations. If desired a film may be laid down on a release surface and transferred directly from the release surface to a substrate to be faced with the film. If desired a block-like product may be produced by moulding the composition and subsequently cut into films of any desired thickness.

Film formation involves laying down the film-forming composition by a suitable technique, removal of the liquid medium from the composition and stripping of the resulting film from the surface on which it was laid down. Preferably, especially in the case of thin films, the support is peeled off the desired film rather than peeling the film off the support. Release coatings and films may be employed. Removal of the liquid medium of the composition will usually be by evaporation, if desired assisted by heating the composition, and temperatures up to or above the boiling point of the liquid medium may be employed. Care should be exercised in removing the liquid medium to avoid the creation of bubbles of gas in the film and too rapid evaporation of the liquid preferably is avoided. Depending to some extent upon the thickness of the desired film, it may be allowed to air-dry at ambient (room) temperature. If desired the film may be separated from the support before removal of the liquid medium from the film has been completed. The film-forming composition preferably is de-gassed prior to being cast to form the film.

Filled polymer films according to the invention containing vermiculite lamellae can be of high strength and films having a failure strength greater than 15 MN/m$^2$ represent a preferred embodiment of the invention. If desired fibres may be incorporated in the film to improve the strength, and particularly the tear-strength, of the film.

Combustible materials such as wood and flexible and rigid polyurethane and polyisocyanurate foams, and metals may usefully be faced with the films, which are useful in any applications where it is desired to face a substrate to impart corrosion resistance or fire protection (which term includes heat-resistance) or both to the substrate. The adhesive used to apply the film to the substrate may be chosen to impart desired properties to or enhance the properties of the facing, e.g. to impart resistance and barrier-properties to the facing. The film may if desired be used an an intermediate layer between for example a substrate to be protected against heat or fire and a decorative outer layer.

The invention is illustrated by the following examples in which the following general procedure was used to prepare the vermiculite suspensions.

Preparation of vermiculite suspensions

150 parts of vermiculite ore (Mandoval micron grade ex-South Africa) are agitated with saturated sodium chloride solution in 1:2 ratio by weight in a tank for 30 minutes at 80°C. This suspension is then centrifuged and washed with dionised water. The wet cake is transferred to a second tank where the vermiculite is stirred with 1.5N n-butylamine hydrochloride (2:1 liquid-solid ratio) for 30 minutes at 80°C. This suspension is then centrifuged and washed with deionised water before transferring the wet cake to a swelling tank in which the vermiculite is stirred in deionised water. After swelling, the suspension contains approximately 20% solids and the particles are random-sized in the range 300-400 microns. This suspension is then passed through a stone-type mill which reduces approximately 50% of the particles to platelets of size less than 50 microns. This milled suspension is classified in a weir-type centrifugal classifier and the lighter particles with sieve size less than say 50 microns are collected for use. Analysis of this suspension by photosedimentometer and disc centrifuge reveals that approximately 40% of the

-11-

particles have a size ("equivalent spherical diameter") of 0.4-1.0 micron. The solids content of the suspension is readily adjusted by adding water to it or removing water from it.

Example 1

An aqueous latex of a copolymer of vinylidene chloride, vinyl chloride, 2-ethylhexyl acrylate and acrylic acid was prepared by the method described in United Kingdom Patent Specification No. 1,588,411. The copolymer contained 70 parts by weight of vinylidene chloride, 22 parts by weight of vinyl chloride, 6 parts by weight of 2-ethylhexyl acrylate and 2 parts by weight of acrylic acid and is available as a 61% solids content latex under the trade name 'Haloflex' 202 from Imperial Chemical Industries PLC.

Dilute ammonia solution was added to the latex (750 g of a 59% solids latex) until the pH of the latex was 7.5.

3629 g of an 18.6% aqueous suspension of vermiculite lamellae were placed in a beaker and stirred with a propellor-type stirrer driven by an air motor. An 8% aqueous solution (42 ml) of sodium pyrophosphate was added to the vermiculite suspension; a marked reduction in the viscosity of the suspension was observed. A 40% by weight solution (51 ml) of a surface active agent, Manoxol OT, in isopropyl alcohol was added to the slowly-stirred vermiculite suspension, followed over a period of time by the neutralised (pH 7.5) polymer latex. The resulting film-forming composition was of a cream-coloured appearance and its pH was 8.3. The total (dry) solids content of the composition was 25.25%.

A sheet of 'Melinex' polyester film of thickness 36 micron was taped to a smooth flat glass plate and wiped with a paper tissue soaked in industrial methylated spirit to remove all traces of dust and grease from its surface. The film-foaming composition prepared above was degassed and cast onto the 'Melinex' film using a Shandon spreader consisting of a rectangular trough having an adjustable doctor blade located above a lengthwise slit close to the bottom of one side of the trough. The thickness of the deposited layer of composition was controlled by the doctor blade and layers of different thickness were produced.

The cast layer of the composition was allowed to dry in air and the resulting film was removed together with the 'Melinex' film backing from the glass plate. The 'Melinex' film was peeled off the filled 'Haloflex' polymer film by a rolling-edge technique (in which the edge of the 'Melinex' film is bent back on itself and the bent-over edge is pulled in a direction parallel to the surface of the film).

Films of thickness 130 mm to 200 microns were produced by the above technique and the properties of one such film, thickness 200 microns, were determined:-

Tensile Strength:-          19 $MN/m^2$

Water-Vapour Transmission Rate:- 1476 $gml/m^2/day$

Example 2

A 'Haloflex' 202/vermiculite film of thickness 200 micron and size approximately 12 cm x 15 cm produced as described in Example 1 was applied as a facing to the surface of a 15 cm x 18 cm plywood panel (5-ply) of thickness approximately 0.6 cm using 'Haloflex' 202 as adhesive. After standing for a few days to allow drying, the faced plywood panel was clamped in a vertical position and the non-luminous flame from a horizontally held bunsen burner (air hole fully open) was applied to the centre of the facing with the tip of the inner blue portion of the flame just clear of the surface of the facing. The bunsen burner flame was applied for about 4 minutes and then was extinguished. The following observations were recorded:-

| Time | Observations |
|---|---|
| 5 seconds | Slight blistering of the surface of the facing had occurred and intermittent flash flaming occurred on the surface of the facing. |
| 32 seconds | The facing had blistered but flash flaming had ceased. |
| 41 seconds | Evolution of gas was noted from behind the upper edge of the facing; no flaming occurred on or at the edges of the facing. |
| 1 min 9 secs | Evolution of gas continued from behind the facing; no flaming observed. |
| 2 min 9 secs | |
| 2 min 45 secs | Increased evolution of gas from behind the facing; no flaming observed. |
| 3 min 26 secs | High rate of evolution of gas continued from behind the facing; very slight intermittent flash flaming noted. |
| 4 min 4 sec | Bunsen burner flame extinguished; no flaming observed. |

Although blistered and no longer bonded to the plywood in the region of impringement of the bunsen burner flame, the facing film remained intact. Upon removal of the blistered portion of the facing film it was found that the surface of the plywood panel had become slightly charred. Very slight and barely noticeable discolouration of the rear surface of the plywood panel (i.e. the surface not exposed to the bunsen burner flame) was noted in the region behind the area of direct impringement of the bunsen burner flame on the facing.

For purposes of comparison, the burning test was repeated on a sample of the plywood panel which was not faced with a protective film. The surface of the panel on which the flame impringed directly became discoloured (brown) after 5 seconds and flames appeared after about 13 seconds. After 25 seconds the surface of the panel was burning in large flames and after 36 seconds pitting of the surface was noted and the red colour of charring was observed. The surface was cracked and deeply pitted after 1 minute 15 seconds and by 1 minute 45 seconds the flames had spread to the edges of the panel. After 3 minutes the panel was burning fiercely with large flames and jets of burning gas and the bunsen burner flame was extinguished after 3 minutes 23 seconds. The flames on the panel slowly became extinguished and it was observed that deep charring and cracking of the plywood surface exposed to the bunsen burner flame has occurred. The central region of the rear surface of the plywood panel was markedly discoloured.

Example 3

One surface of an aluminium panel ('Q'-panel, 15 cm x 10 cm x 0.6 mm) was faced with a 'Haloflex' 202/vermiculite film of thickness 200 microns produced as described in Example 1 using Evostick 5003 as adhesive. The faced panel, after standing for several days to allow drying, was subjected to a fire test as described in Example 2 except that a Meker burner was used instead of a bunsen burner.

The following observations were noted:-

| | |
|---|---|
| 6 seconds | - the facing film was blistered and surface flash flaming was noted. |
| 57 seconds | - Slight edge-flaming was observed as the adhesive burned. |
| 1 min 25 secs | - flaming had ceased. |
| 2 min 6 secs | - no flaming. |
| 3 min | - no flaming. |
| 5 min | - no changes observed. Meker burner flame extinguished. |

The surface of the facing film was covered with large hard blisters but the film remained intact and non-blistered regions remained firmly bonded to the aluminium surface.

There was no sign of any melting of the aluminium panel.

For the purposes of comparison an aluminium "Q"-Panel without facing was subjected to the flame test. After 20 seconds bending of the panel was noted and after 58 seconds the centre of the panel melted and the panel broke into two pieces.

Example 4

The procedure described in Example 3 was repeated using a filled polymer film made as described in Example 1 from a copolymer of Tg = -5°C consisting of 70 parts by weight vinylidene chloride, 10 parts by weight vinyl chloride, 18 parts by weight 2-ethylhexyl acrylate and 2 parts by weight acrylic acid made by the method described in BP 1,588,411, and a vermiculite suspension thickened by the incorporation of fine silica ("Neosyl" available from Crosfields). The composition comprised 33.5% by weight polymer, 50.2% by weight vermiculite and 16.3% by weight silica.

In the flame test it was observed that intermittent fairly large flames were present on the surface of the facing and small blisters had begun to appear in the facing after 5 seconds. After 20 seconds, flaming was much reduced and had ceased by 30 seconds. After 30 seconds one of the blisters in the facing cracked. No further changes were observed and the Meker burner flame was extinguished after 5 minutes. Examination of the facing film revealed numerous small blisters and one surface crack but the film remained essentially intact. There was no sign of melting of the aluminium panel.

CLAIMS

1. A filled polymer film comprising a dispersion of vermiculite lamellae in a film-forming polymeric binder.

2. A filled polymer film as claimed in claim 1 wherein the amount of the vermiculite lamellae is from 20% to 80% by weight of the film.

3. A film as claimed in claim 1 or claim 2 wherein the vermiculite lamellae are of size below 50 microns.

4. A film as claimed in claim 3 wherein the vermiculite lamellae are of size below 20 microns.

5. A film as claimed in any one of the preceding claims wherein the polymeric binder is a halogen-containing polymer or copolymer.

6. A film as claimed in claim 5 wherein the polymeric binder is a copolymer of vinyl chloride, vinylidene chloride and one or more alkyl acrylates or alkyl methacrylates.

7. A film as claimed in claim 6 wherein the copolymer also comprises one or more aliphatic alpha-beta unsaturated carboxylic acids.

8. A film as claimed in any one of the preceding claims having a failure strength greater than 15 $MN/m^2$.

9. Use of a film as claimed in any one of claims 1 to 8 for the insulation of a substrate.

10. Use of a film as claimed in any one of claims 1 to 8 for the fire-protection of a substrate.